# EUROPEAN PATENT SPECIFICATION

(11) **EP 4 285 742 B1**
(45) Date of publication and mention of the grant of the patent: **11.02.2026**
(21) Application number: 23199225.6
(22) Date of filing: 19.09.2019
(51) Int. Cl.: B65D 81/34, B65D 75/58, B65D 65/40, A23P 30/00

(54) **FROZEN FOOD PRODUCT, FROZEN FOOD PACKAGING CONTAINER, AND FROZEN FOOD PACKAGING MATERIAL**
GEFRORENES LEBENSMITTELPRODUKT, VERPACKUNGSBEHÄLTER FÜR GEFRORENE LEBENSMITTEL UND VERPACKUNGSMATERIAL FÜR GEFRORENE LEBENSMITTEL
PRODUIT ALIMENTAIRE CONGELÉ, RÉCIPIENT D'EMBALLAGE ALIMENTAIRE CONGELÉ ET MATÉRIAU D'EMBALLAGE ALIMENTAIRE CONGELÉ

(43) Date of publication of application: 06.12.2023
(62) Divisional of application: 19945788.8
(73) Proprietor: CJ Cheiljedang Corporation, Seoul 04560 (KR)
(72) Inventor: KIM, Tae Han, Seongnam-si, Gyeonggi-do (KR); KIM, Hoo Sik, Yongin-si, Gyeonggi-do (KR); LEE, Byung Kook, Seoul (KR); JEONG, Da Woon, Seoul (KR); SON, Eun Yeong, Suwon-si, Gyeonggi-do (KR); LEE, Sang Bong, Suwon-si, Gyeonggi-do (KR); LEE, Jong Il, Seoul (KR); JEON, Byeong Hyeon, Seoul (KR)
(74) Representative: Bandpay & Greuter

(56) References cited:
- EP-B1- 2 639 172
- WO-A1-2016/121897
- GB-A- 2 307 159
- JP-A- 2006 051 008
- KR-A- 20170 109 937
- KR-B1- 101 302 159

## Description

### [Technical Field]

The present application relates to a frozen food product, a frozen food product packaging container, and a frozen food product packaging material.

### [Background Art]

In cultural areas, such as Korea, China, and Japan, in which rice is a staple food, instant foods using rice, which may be simply stored and preserved and be conveniently carried, have ben preferred, but they are generally mostly cold foods and various frozen food products cannot be provided. In particular, frozen food products that may be taken while being carried are rare.

The reasons why gimbab that is a representative food using rice cannot be released as a frozen food product is that frozen moisture is delivered to dried laver so that it becomes damp and its texture of food is hindered and that a temperature deviation is generated severely during cooking in a microwave oven so that tastes and qualities deteriorate. In a triangular gimbab, a vinyl layer is disposed between laver and rice for reduction of delivery of moisture, but a problem of the laver becoming damp cannot be completely solved. Accordingly, a triangular gimbab is released as a cold food having a circulation period of mainly one to two days, and cannot be released as a frozen food product of a long circulation period.

Furthermore, the foods using rice are fragile, and a separate container and a spoon are required because they are taken in hot states, whereby portability deteriorates.

In consideration of the problems, it is necessary to develop technologies for a frozen food product and a packaging material that may be easily carried, does not have a temperature deviation during cooking in a microwave oven, and may prevent delivery of moisture over a long period of time.

Also known is EP2639172B1, which discloses a susceptor for a dough-based vase-shaped snack heatable by microwave.

Also known is GB2307159A, which discloses a packaged foot article for heating in a microwave over and comprising at least one farinaceous layer.

Also known is JP2006051008A, which discloses food packaged in an edible container.

Also known are KR101302159B1 and KR1020170109937A.

Also known is WO2016/121897A1, which discloses a frozen foot product packaged in a container.

### [Disclosure]

### [Technical Problem]

The present application has been made to solve the above-described problems, and is directed to solving at least one of the following problems.

The present application providers a frozen food product and a packaged frozen food product, by which delivery of moisture to an edible container may be suppressed.

The present application also provides a structure that may uniformly heat a frozen food accommodated in an interior space of a conical shape.

The present application provides a structure, by which a frozen food may be heated while being easily carried.

The present application provides a packaging material that may efficiently heat and package a frozen food product.

### [Technical Solution]

The invention is defined by the appended claims.

A packaging material according to an embodiment includes a heat emitting layer that emits heat by using microwaves, and a protrusion protruding from the heat emitting layer and that is gripped, and the heat emitting layer has a shape defined by an outer line, an inner line, and two connection lines connecting left distal ends of the outer line and the inner line and right distal ends of the outer line and the inner line.

A packaging material according to an embodiment includes a packaging material body part forming a conical shape, and a heat emitting layer that emits heat by using microwaves, and covering at least a portion of the packaging material body part.

A container according to an embodiment includes a conical edible member provided with an interior space and formed of an edible material, and a second packaging material surrounding the edible member, that emits heat by using microwaves, and having a conical shape.

A frozen food product according to an embodiment includes at least two frozen foods, and a container accommodating the frozen food, and the container includes a contact area contacting the frozen foods, and a noncontact area spaced apart from the frozen foods.

A packaged frozen food product according to an embodiment includes a frozen food formed such that a lower portion thereof is convex downwards in a longitudinal section thereof, a conical edible container accommodating the frozen food and formed of an edible material, and a conical packaging material surrounding the edible container.

A frozen food product according to an embodiment includes a frozen food, an edible container having an interior space, in which the frozen food is accommodated, and formed of an edible material, and an inner moisture delivery preventing layer disposed in at least a partial area between the frozen food and an outer surface of the edible container, and that suppresses moisture from being delivered from the frozen food to the edible container.

A frozen food product according to an embodiment includes a frozen food, of which a lower portion has a shape of a portion of a spherical surface, a conical edible container having an interior space, in which the frozen food is accommodated, and formed of an edible material, and a first packaging material disposed to surround at least a portion of the frozen food to suppress moisture from being delivered from the frozen food to the edible container.

A packaged frozen food product according to an embodiment includes a frozen food, an edible container forming an interior space, in which the frozen food is accommodated, and formed of an edible material, and a packaging material including a first packaging material surrounding the frozen food and disposed between the edible container and the frozen food to suppress moisture from being delivered to the edible container, and a second packaging material surrounding the edible container, and that emits heat by using microwaves.

A frozen food product according to an embodiment includes a frozen food, of which a lower portion has a shape of a portion of a spherical surface, a conical edible container having an interior space, in which the frozen food is accommodated, and formed of an edible material, and a first packaging material disposed between the frozen food and the edible container in a shape surrounding at least a portion of the frozen food to suppress moisture from being delivered from the frozen food to the edible container, and an inner surface of the first packaging material has an area adhered to an outer surface of the frozen food and an area that is not adhered to the outer surface of the frozen food, and an outer surface of the first packaging material has an area adhered to an inner surface of the edible container and an area that is not adhered to the inner surface of the edible container.

### [Advantageous Effects]

A frozen food product may be easily carried and a frozen food product may be uniformly heated.

Delivery of moisture to an edible container may be prevented and a user may feel a crispy feeling during eating after cooking.

### [Description of Drawings]

FIG. 1 is a view of a packaged frozen food product according to an embodiment of the present application.
FIG. 2 is an exploded perspective view of a packaged frozen food product according to an embodiment of the present application.
FIG. 3 is a longitudinal sectional view of a packaged frozen food product according to an embodiment of the present application.
FIG. 4 is an enlarged view of area "z" of FIG. 3.
FIG. 5 is a view illustrating a situation, in which a first packaging material is removed from a packaged frozen food product according to an embodiment of the present application.
FIG. 6 is a longitudinal sectional view of a frozen food product according to a modification of an embodiment of the present application.
FIG. 7 is a perspective view of a frozen food according to another modification of an embodiment of the present application.
FIG. 8 is a longitudinal sectional view of a structure of a container according to an embodiment of the present application.
FIG. 9 is a planar view of an edible container according to an embodiment of the present application.
FIG. 10 is a planar view of an exemplary edible container.
FIG. 11 is a planar view of another exemplary edible container.
FIG. 12 is a planar view of another exemplary edible container.
FIG. 13 is a view of an edible container according to an embodiment of the present application, when viewed from a front side.
FIG. 14 is a view illustrating a first stack structure according to an embodiment of the present application.
FIG. 15 is a view illustrating a second stack structure according to an embodiment of the present application.
FIG. 16 is a view illustrating a third stack structure according to an embodiment of the present application.
FIG. 17 is a view of an edible container according to an embodiment of the present application, when viewed from a top.
FIG. 18 is a planar view of an inner surface of a second packaging material according to an embodiment of the present application.
FIG. 19 is a planar view of an outer surface of a second packaging material according to an embodiment of the present application.
FIG. 20 is a planar view of a first packaging material according to an embodiment of the present application.
FIGS. 21 and 22 are planar views of a first packing material according to other modifications of an embodiment of the present application.

### [Mode for Invention]

Hereinafter, some embodiments of the present application will be described in detail with reference to the exemplary drawings. Throughout the specification, it is noted that the same or like reference numerals denote the same or like components even though they are provided in different drawings. Further, in the following description of the present application, a detailed description of known functions and configurations incorporated herein will be omitted when it may make the subject matter of the present application rather unclear.

Throughout the specification, a "conical shape" refers to a 3-dimensional shape, a cross-sectional area of which gradually decreases or increases in one direction. A cross-sectional shape of a cone is not limited, and may be various cross-sectional shapes, such as a circular shape, an elliptical shape, a triangular shape, a rectangular shape, or other polygonal shapes. For example, a conical shape, a cross-section of which is circular, may be similar to a shape of an ice cream cone. For example, a conical shape, a cross-section of which is elliptical, may be similar to a shape of Buritto or Wrap. For example, a conical shape, a cross-section of which is rectangular, may be similar to a shape of a pyramid.

In addition, terms, such as first, second, A, B, (a), (b) or the like may be used herein when describing components of the present application. The terms are provided only to distinguish the components from other components, and the essences, sequences, orders, and the like of the components are not limited by the terms. When it is described that one element is connected, coupled, or electrically connected to another element, the element may be directly connected or coupled to the other element, but a third element may be connected, coupled, or electrically connected between the elements.

### Frozen Food Product and Packaged Frozen Food Product

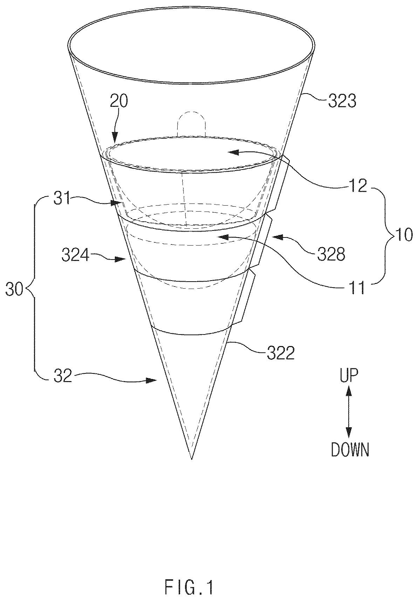

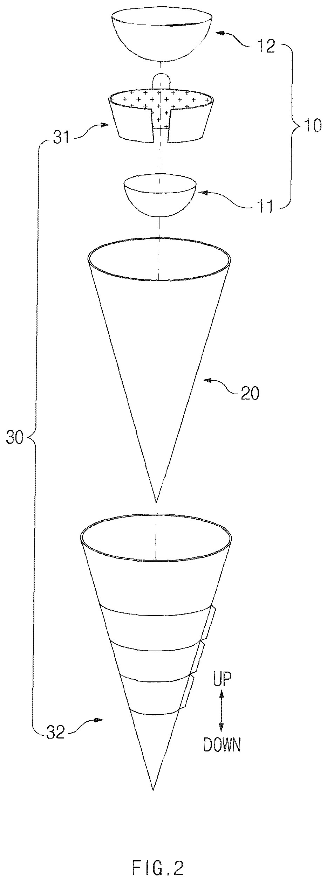

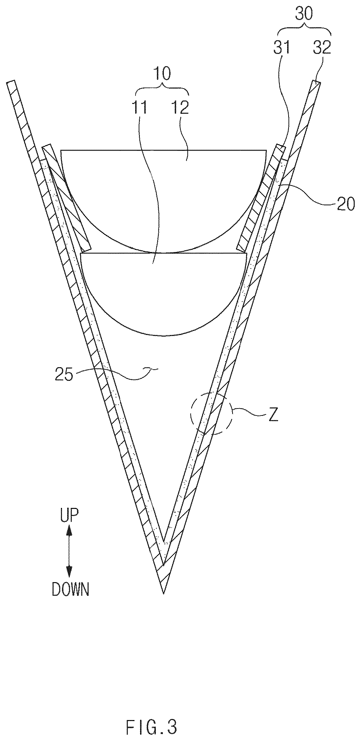

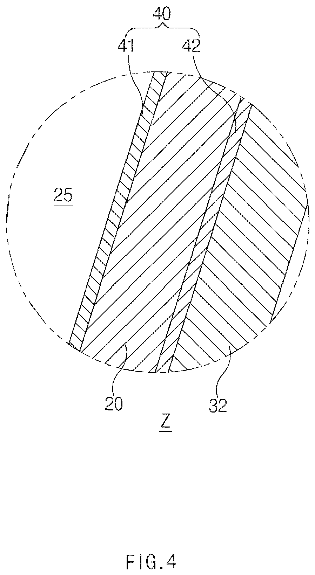

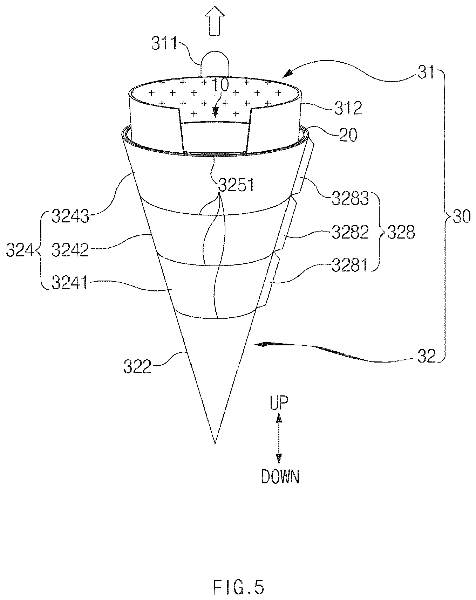

FIG. 1 is a view of a frozen food product according to an embodiment of the present application. FIG. 2 is an exploded perspective view of the packaged frozen food product according to the embodiment of the present application. FIG. 3 is a longitudinal sectional view of the packaged frozen food product according to the embodiment of the present application. FIG. 4 is an enlarged view of area "z" of FIG. 3. FIG. 5 is a view illustrating a situation, in which a first packaging material is removed from a packaged frozen food product according to the embodiment of the present application.

According to an embodiment of the present application, a product may be provided in a form of a frozen food product or a packaged frozen food product. Referring to FIGS. 1 to 5, the frozen food product according to the embodiment of the present application may include a frozen food 10 and an edible container 20. The packaged frozen food product may further include a packaging material 30, in addition to the frozen food 10 and the edible container 20. For example, the packaging material 30 may include a first packaging material 31 provided in an interior space of the edible container 20, and a second packaging material 32 that surround an outer side of the edible container 20.

The frozen food 10 refers to an edible food that is formed into a lump to have a specific shape and is frozen. The frozen food 10 may be various foods, for example, such as frozen rice, frozen bibimbap, frozen fried rice, frozen barbequed beef, and is not limited to specific examples. The frozen food 10may have a shape that has a small thermal deviation during freezing or cooking, and the shape may be a shape, such as a spherical shape, a hemispherical shape, a crushed spherical shape ,a cubic shape, or a bar shape. The frozen food 10 according to an example may have a hemispherical shape including a curved part, a lower portion of which has a partial shape of a sphere, and thus may be easily formed and may be heated more uniformly when compared with a conical frozen food.

A single or a plurality of frozen foods 10 may be constituted. When a plurality of frozen foods 10 are constituted, a useful load of the frozen foods 10 may be enhanced by properly disposing the plurality of frozen foods 10 in the interior space of the edible container 20 while forming the frozen foods 10 in a shape that is advantageous in heating of a circular shape, a spherical shape, and the like.

For example, the frozen foods 10 may include two frozen foods of a first frozen food 11 and a second frozen food 12. The first frozen food 11 may be inserted into the interior of the edible container 20 through an upper opening 24 formed in the edible container 20 first, and the second frozen food 12 may be inserted into the edible container 20 later to be seated and stacked on the first frozen food 11. The first frozen food 11 and the second frozen food 12 may be accommodated in an interior space 25 of the edible container 20 while being stacked along an upward/downward direction in this way. However, the number of the frozen foods 10 that may be accommodated in the edible container 20 is not limited thereto.

The edible container 20 is a container that has the interior space 25, in which the frozen foods 10 are accommodated, and is formed of an edible material. The edible container 20 may have various shapes for easy gripping by a user. For example, the edible container 20 may have a conical shape, of which a cross-sectional area taken along a plane that is normal to an upward/downward direction decreases downwards, and the cross-sectional shape (for example, a circular shape, an elliptical shape, or a polygonal shape) may be various. The conical edible container 20 may be easily gripped by the user to be easily carried and eaten, and may be easily formed whereby a manufacturing process thereof is simple and process costs thereof may be saved.

The expression of the container used in the specification of the present application refers to an object that has a 3-dimensional shape to form a space for containing contents in an interior thereof. It is not necessary to close all portions of the container such that the container surrounds the contents, and a portion of the container may be opened. According to the definition, the edible container 20 may be formed such that the edible member functions as the container.

The packaging material 30 is an inedible member that contacts an outer surface or an inner surface of the edible container 20. In the present application, the packaging material 30 may have various functions, such as prevention of delivery of moisture and emission of heat, in addition to protection of the frozen food 10 and the edible container 20 from external damage or contaminations thereof. In detail, the packaging material 30 may include the first packaging material 31 or the second packaging material 32.

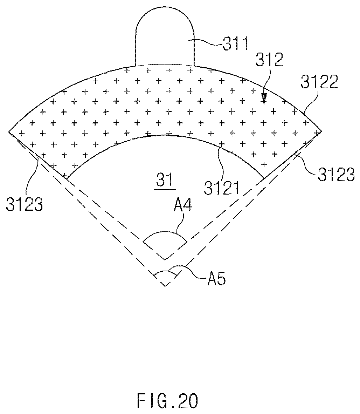

The first packaging material 31 may include a first heat emitting layer (312 of FIG. 20) and a protrusion (311 of FIG. 20). The first heat emitting layer (312 of FIG. 20) is a part that is configured to emit heat by using microwaves to heat the frozen foods 10 while surrounding the frozen foods 10. The first packaging material 31 may be provided between the frozen foods 10 and the edible container 20 and may have functions of emission of heat and prevention of delivery of moisture. A detailed description thereof will be made later with reference to FIGS. 20 to 22.

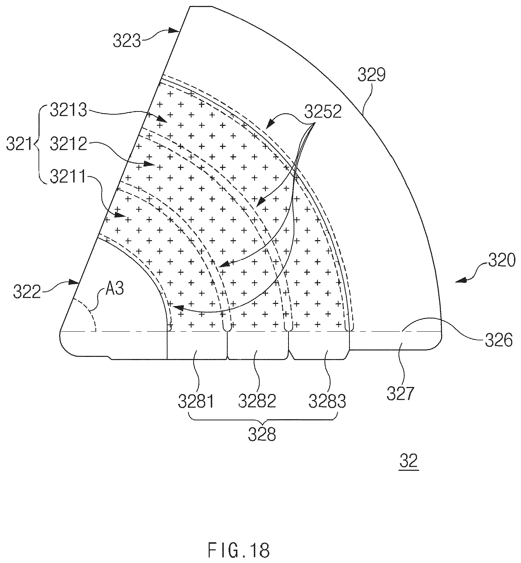

The second packaging material 32 may include a second heat emitting layer (321 of FIG. 18). The second heat emitting layer (321 of FIG. 18) is a part that is configured to emit heat by using microwaves to heat the edible container 20 while surrounding an outer surface of the edible container 20. A detailed description thereof will be made later with reference to FIGS. 18 to 19.

The frozen food product may include a moisture delivery preventing layer. The moisture delivery preventing layer refers to a layer disposed to prevent moisture from being delivered to the edible container 20 whereby the edible container 20 becomes damp in a cooking or circulation process and thus maintain a crispy texture of foods of the edible container 20. The moisture delivery preventing layer may include an outer moisture delivery preventing layer that prevents moisture delivered from an outside, and an inner moisture delivery preventing layer that prevents moisture delivered from an inside.

The outer moisture delivery preventing layer may be edible fat, shellac, lecithin, and/or gelatin, which is coated on an outer surface of the edible container 20. In detail, the outer moisture delivery preventing layer may include an outer oil layer 42. The outer oil layer 42 may be formed of an edible oil, in detail, at least one selected from a group consisting of coconut palm hardened oil, palm core hardened oil, shortening oil, soybean hardened oil, palm oil, soybean partially hardened oil, palm olein oil, canola oil, olive oil, grape seed oil, brown rice oil, corn oil, soybean oil, and fatty powder thereof. In more detail, the edible oil is a solid in a circulation condition (less than 0°C), and may effectively prevent delivery of moisture during freezing and circulation and enhance tastes and flavors during cooking/eating by using a liquid material during heating (70°C). For example, the outer oil layer 42 may include a soybean hardened oil as an example of satisfying the condition. The outer oil layer 42 may be formed by forming the edible container 20 in a conical shape, and baking and fixing the edible container 20, and then coating an oil through a scheme, for example, of spraying, immersing, or application.

The outer moisture delivery preventing layer may include a packaging material that surrounds the edible container 20, for example, the second packaging material 32. The second packaging material 32 may be a paper packaging material, in which a coating layer is stacked on a base layer. The coating layer may be a polymer-based material generally used as a coating layer like a polyethylene terephthalate (PET) material, but is not limited to specific examples.

The second packaging material 32 may easily block moisture from an outside due to the coating layer and the paper layer having specific thicknesses. Furthermore, the second packaging material 32 may include a heat emitting layer provided between the coating layer and the basic layer. The heat emitting layer is a layer, in which a heat emitting material (for example, a susceptor) that may emit heat by using microwaves, and may decrease moisture in the edible container 20 by emitting heat when a microwave oven is used.

The inner moisture delivery preventing layer may be disposed in at least a partial area between the frozen food 10 and an outer surface of the edible container 20. The inner moisture delivery preventing layer may function to suppress the moisture from being delivered from the frozen food 10 to the edible container 20.

The inner moisture delivery preventing layer may include an inner oil layer 41 coated on an inner surface of the edible container 20. In detail, the inner moisture delivery preventing layer may include the inner oil layer 41. The inner oil layer 41 may be formed of an edible oil, in detail, at least one selected from a group consisting of coconut palm hardened oil, palm core hardened oil, shortening oil, soybean hardened oil, palm oil, soybean partially hardened oil, palm olein oil, canola oil, olive oil, grape seed oil, brown rice oil, corn oil, soybean oil, and fatty powder thereof. The inner oil layer 41 may be disposed in at least a partial area between the frozen food 10 and the edible container 20 to suppress moisture from being delivered from the frozen food 10 to the edible container 20. The inner oil layer 41 may be formed of an edible oil. In more detail, the edible oil is a solid in a circulation condition (less than 0°C), and may effectively prevent delivery of moisture during freezing and circulation and enhance tastes and flavors during cooking/eating by using a liquid material during heating (70°C). For example, the inner oil layer 41 may include a soybean hardened oil as an example of satisfying the condition. Furthermore, the inner oil layer 41 may be formed by forming the edible container 20 in a conical shape, and baking and fixing the edible container 20, and then coating an oil on the inner surface of the edible container 20 through a scheme, for example, of spraying, immersing, or application.

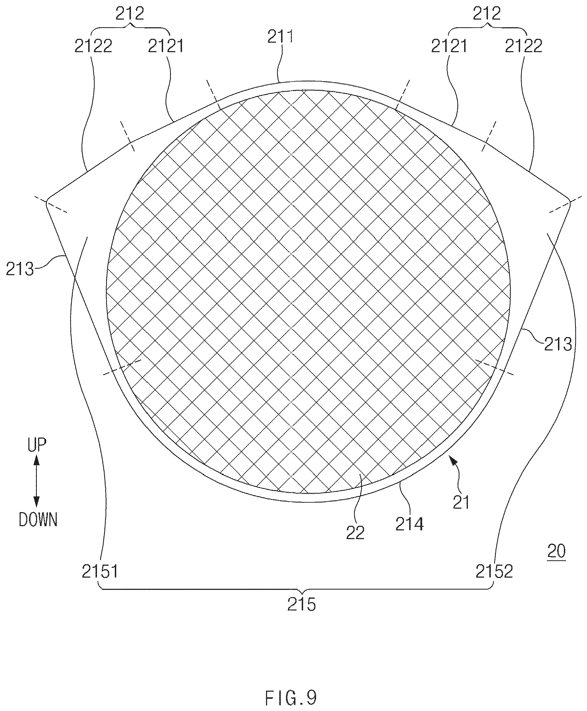

The inner moisture delivery preventing layer may include an intermediate layer disposed between an inner skin (22 of FIG. 9) and an outer skin (21 of FIG. 9) included in the edible container 20, which will be described below. The intermediate layer may be formed by applying a material for preventing moisture on partial surfaces of the outer skin (21 of FIG. 9) and the inner skin (21 of FIG. 9), and then joining the inner skin (22 of FIG. 9) and the outer skin (21 of FIG. 9). The material for forming the intermediate layer may include at least one selected from a group consisting of shellac, lecithin, and gelatin.

The inner moisture delivery preventing layer may include the first packaging material 31 having a shape that surrounds the frozen food 10 when being inserted between the frozen food 10 and the edible container 20. The packaging material that surrounds the frozen food 10, for example, the first packaging material 31 may have a shape of a portion of a conical shape, which surrounds at least a portion of the frozen food 10 to prevent the moisture from being delivered from the frozen food 10 to the edible container 20, and may be disposed between the frozen food 10 and the edible container 20 to physically prevent delivery of moisture.

A lower portion of the first packaging material 31 may be disposed between the second frozen food 12 and the first frozen food 11 with respect to an upward/downward direction, and may extend to a side surface of the first frozen food 11. When the lower portion of the first packaging material 31 is disposed between the second frozen food 12 and the first frozen food 11 not to contact the first frozen food 11, the first packaging material 31 may be removed relatively easily during eating. When the lower portion of the first packaging material 31 extends to a side surface of the first frozen food 11, the first packaging material 31 may prevent moisture from being delivered from the first frozen food 11. In this way, the lower portion of the first packaging material 31 may be variously disposed according to an intended purpose, and is not limited to a specific embodiment.

The first packaging material 31 may include the first heat emitting layer 312. The first heat emitting layer 312 is a layer, in which a heat emitting material (for example, a susceptor) that may emit heat by using microwaves is stacked, and may decrease moisture in the edible container 20 by emitting heat when a microwave oven is used and may heat the frozen foods such that a temperature deviation of the frozen foods 10 is reduced. The first heat emitting layer 312 may have a shape of a portion of a ring when being unrolled. Opposite ends of the first heat emitting layer 312 may overlap each other by a specific width, and may surround the frozen food 10.

The first packaging material 31 is adhered to the frozen foods 10 further than the edible container 20 surrounds the frozen foods 10 and the first packaging material 31 includes the first heat emitting layer 312, whereby the frozen foods 10 may be uniformly heated when the frozen food product is heated by using a microwave oven.

A volume of the first frozen food 11 may be smaller than a volume of the second frozen food 12, whereby the first frozen food 11 may be heated uniformly well by using microwaves. However, because the second frozen food 12 may be heated unevenly due to the volume thereof as compared with the first frozen food 11, it may be heated more uniformly with the help of a disposition state of the first packaging material 31 and an operation of the first heat emitting layer 312, which have been described above. However, the present application is not limited thereto, and it is apparent that the first heat emitting layer 312 may be disposed to also heat the first frozen food 11.

The first packaging material 31 may further include a protrusion 311 that protrudes from the first heat emitting layer 312 upwards such that the first heat emitting layer 312 is separated from a location between the frozen food 10 and the edible container 20 through gripping. The first heat emitting layer 312 may be a help when the frozen food product is heated, and the first heat emitting layer 312 may be removed by using the protrusion 311 during eating.

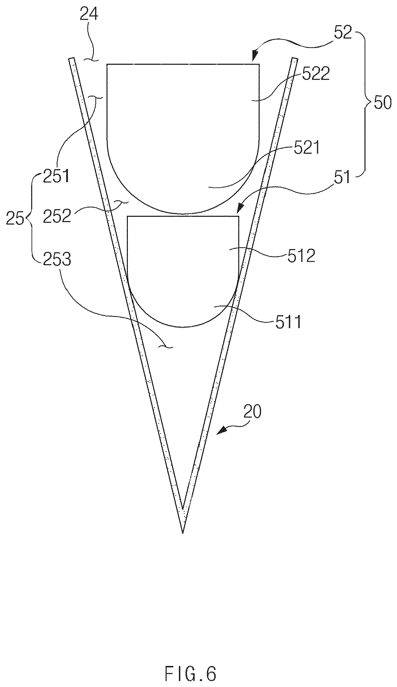

FIG. 6 is a longitudinal sectional view of a frozen food product according to a modification of an embodiment of the present application.

A lower portion of a frozen food 50 included in the frozen food product in a longitudinal section thereof may be convex downwards. The frozen food 50 may further include columnar parts 512 and 522 as in the modification of FIG. 6, in addition to the curved parts 511 and 521. The curved parts 511 and 521 may have a shape of a hemisphere, which is obtained by dividing a sphere into two equal parts. The columnar parts 512 and 522 may protrude upwards from upper surfaces of the curved parts 511 and 521 and have a cylindrical shape. The frozen food 50 having the shape, as illustrated, may also include a first frozen food 51 and a second frozen food 52 seated on an upper side thereof.

An outer surface of the frozen food 50 may include a contact area and a noncontact area. The contact area refers to an area of an outer surface of the frozen food 50, which contacts an inner surface of the container, and the noncontact area correspond to the other portions, and refers to an area that is spaced apart from the inner surface of the container and forms a non-occupied space that is an empty space with the inner surface of the container.

Because the shape of the frozen food 50 is not a conical shape that coincides with the interior space 25 of the container, the areas may be classified and the non-occupied space may be formed. Due to the shape of the frozen food 50, the frozen food 50 may be heated more uniformly when the frozen product is heated for eating than when the frozen food 50 is formed to have the same conical shape as that of the interior space 25 of the container.

The first frozen food 51 may include the first curved part 511 that is the curved part, and the second frozen food 52 also may include the second curved part 521 that is the curved part. The first frozen food 51 may be inserted into the container from the first curved part 511 and be accommodated in the container, and the second frozen food 12 also may be inserted into the container from the second curved part 521 and be seated on a flat surface formed on an upper side of the columnar part of the first frozen food 11.

The interior space 25 formed by the edible container 20, as described above, may include an occupied space and a non-occupied space. The non-occupied space may include an upper non-occupied space 251, an intermediate non-occupied space 252, and a lower non-occupied space 253 according to locations thereof.

The lower non-occupied space 253 may be located on a lower side of the first frozen food 51, and may be defined by a portion of the inner surface of the edible container 20, which is adjacent to an apex located on a lower side, and the curved part 511 of the first frozen food 51.

The intermediate non-occupied space 252 may be defined by the inner surface of the edible container 20, the columnar part 512 of the first frozen food 51, the upper surface of the first frozen food 51, and the curved part 521 of the second frozen food 52.

The upper non-occupied space 251 may be defined by the inner surface of the edible container 20, and the columnar part 522 of the second frozen food 52.

The frozen food 50 may be formed such that a difference between a maximum value and a minimum value of the surface temperatures thereof may be less than 70°C, 65°C, or 60°C during cooking of 700 W for 90 seconds. This means that a cooking deviation becomes smaller as the difference between the maximum value and the minimum value of the surface temperatures becomes smaller. It is more advantageous as the difference between the maximum value and the minimum value is smaller, and a lower limit is not meaningful, but the difference between the maximum value and the minimum value of the surface temperatures may be 10°C, 20°C, or 30°C when the frozen food is cooked at 700 W for 90 seconds.

The frozen food 50 may be formed such that a difference between a maximum value and a minimum value of the core temperatures thereof may be less than 50°C, 40°C, or 30°C during cooking of 700 W for 90 seconds. This means that a cooking deviation becomes smaller as the difference between the maximum value and the minimum value of the core temperatures becomes smaller. It is more advantageous as the difference between the maximum value and the minimum value is smaller, and a lower limit is not meaningful, but the difference between the maximum value and the minimum value of the core temperatures may be 10°C or 15°C, when the frozen food is cooked at 700 W for 90 seconds.

The frozen food 50 may be formed such that the difference between the maximum value and the minimum value of the core temperatures is 50°C or less, 40°C or less, or 30°C or less and the difference between the maximum value and the minimum value of the surface temperatures is 70°C or less, 65°C or less, or 60°C or less when being cooked at 700 W for 90 seconds. This means that a cooking deviation becomes smaller as the differences between the maximum values and the minimum values of the surface temperatures and the core temperatures become smaller.

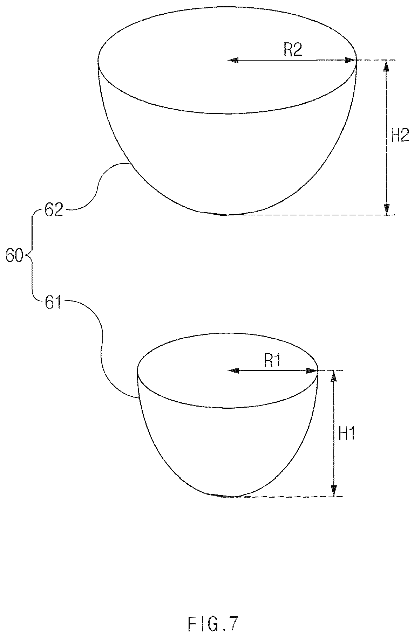

FIG. 7 is a perspective view of a frozen food product 60 according to another modification of an embodiment of the present application.

According to another modification of the embodiment of the present application, the frozen food product may be provided to include the frozen food 60 in the illustrated form. The frozen food 60 may be applied to the frozen food product or the packaged frozen food product according to the embodiment of the present application.

The frozen food 60 may include a first frozen food 61 and a second frozen food 62. The frozen food 60 also may include a curved part. FIG. 7 illustrates that the frozen food 60 includes only the curved part, but the frozen food 60 also may include the above-described columnar part.

The curved part may have a modified hemispherical shape that is long with respect to an upward/downward direction. That is, heights H1 and H2 may be larger than radii R1 and R2 of upper surfaces of the curved part. A value obtained by dividing the heights H1 and H2 of the curved part by the radii R1 and R2 of the upper surface may be 1.2 to 1.5. A value obtained by dividing the height H1 of the curved part of the first frozen food 61 by the radius R1 of the upper surface thereof may be larger than a value obtained by dividing the height H2 of the curved part of the second frozen food 62 by the radius R2 of the upper surface thereof.

A capacity of the non-occupied space formed when the frozen food 60 is used for the above-described conical edible container (20 of FIG. 6) may be less than or equal to 35% to 50% of a capacity of the interior space (25 of FIG. 6).

A volume of the second frozen food 62 may be larger than a volume of the first frozen food 61, and a volume of the second frozen food 62 may be 1.4 times to 1.6 times of the volume of the first frozen food 61.

The frozen foods 10, 50, and 60 of the present application may be formed by pressing subdivided foods with a mold of a specific shape when the foods cooked by applying heat to a source material are subdivided and pass while being seated on a conveyor. For example, the hemispherical mold presses the foods when the hemispherical frozen food 10 is formed. The formed foods may be frozen to form the frozen foods 10, 50, and 60.

The frozen foods may have a conical shape, a spherical shape, and a hemispherical shape. Table 1 represents the minimum values, the maximum values, and the difference values of the core temperatures and the surface temperatures, which may be identified in a manufacturing example of forming the frozen food product by using the frozen foods of various shapes and heating the frozen food product for 90 seconds by using a 700 W microwave oven. The surface temperatures may be acquired by using thermal images. For the conical shape, the frozen food of one lump of 100 g was used, and for the spherical shape and the hemispherical shape, the frozen foods of two lumps of 65 g and 35 g were used.

**[Table 1]**

| | | Conical shape | Spherical shape | Hemispherical shape |
|---|---|---|---|---|
| Core temperatures | Minimum value | 31°C | 59°C | 49°C |
| | Maximum value | 84°C | 79°C | 73°C |
| | Difference value | 53°C | 20°C | 24°C |
| Surface temperatures | Minimum value | 16°C | 23.5°C | 26.5°C |
| | Maximum value | 89.5°C | 82.5°C | 74°C |
| | Difference value | 73.5°C | 59°C | 47.5°C |

The following contents described for the elements of the present application with reference to the drawings may be applied to the frozen food product and the packaged frozen food product, which may be provided as the above-described product. Further, the description of the frozen foods 50 and 60 of the modifications, except for the contents for the columnar part, may be also applied to the frozen food 10 according to the present application in the same manner.

### Container

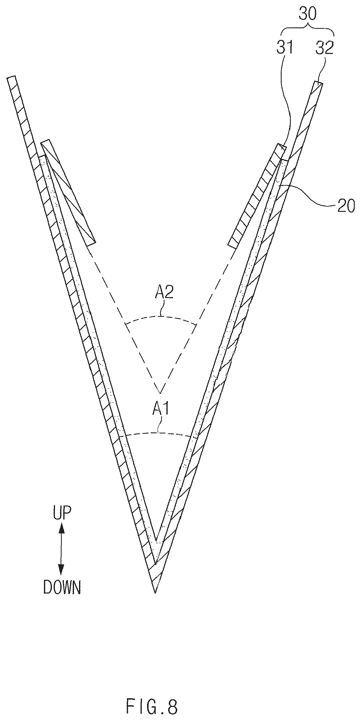

FIG. 8 is a longitudinal sectional view of a structure of a container according to an embodiment of the present application.

According to an embodiment of the present disclosure, the product may be provided in a form of a container. Referring to FIG. 8, the container according to the embodiment of the present application may include the edible container 20 and the second packaging material 32, and may further include the first packaging material 31 to constitute the packaging material 30 like the second packaging material 32.

The description of the first packaging material 31 and the second packaging material 32 that constitute the above-described packaging material 30, the description of the edible container 20, and the description of the below-described case, in which the product is provided in a form of the first packaging material 31 and the second packaging material 32, may be applied to the case, in which the product is provided in a form of the container, in the same manner.

The first packaging material 31 may have various shapes that surround a circumference of the frozen food 10 and is easily removed during eating. For example, the first packaging material 31 may have a stripe shape that extends in a lengthwise direction thereof when being unrolled. The first packaging material 31 of the shape may implement a 3-dimensional shape to surround the circumference of the frozen food 10 by causing the stripe-shaped ends to contact each other.

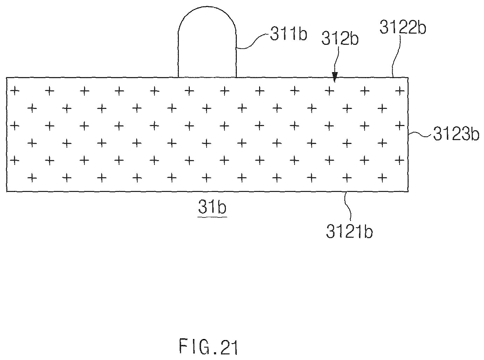

The stripe shape may be variously selected according to a form of the 3-dimensional shape that is to be implemented. For example, when a cylindrical 3-dimensional shape is to be formed, the stripe shape may be a rectangular shape. For example, when a 3-dimensional shape like a side surface of the conical shape is to be formed, the stripe shape may be a shape that is deflected in a lengthwise direction thereof. The exemplary stripe shapes may be identified with reference to FIGS. 20 and 21.

Referring to FIG. 8, an inclination of a generating line of a 3-dimensional shape formed by the first packaging material 31 according to an example may be smoother than an inclination of a generating line formed by the edible container 20. Accordingly, in a description of a longitudinal section of the frozen food product, the first packaging material 31 may be disposed between the frozen food 10 and the edible container 20 such that an angle (A1 of FIG. 8) formed by two outer lines located on an outermost side of the edible container 20 may be smaller than an angle (A2 of FIG. 8) formed by two outer lines located on an outermost side of the first packaging material 31. In another expression, the edible container 20 and the first packaging material 31 may have a tapered shape, a width of which becomes smaller as it goes downwards, in a longitudinal section thereof. Furthermore, a degree, by which the width of the first packaging material 31 becomes smaller, may be larger than a degree, by which the width of the edible container 20 becomes smaller, as it goes downwards.

Because the disposition state of the first packaging material 31 is as described above, an inner surface of the first packaging material 31 may have an area that is adhered to an outer surface of the frozen food 10, and an area that is not adhered thereto. Furthermore, the outer surface of the first packaging material 31 may have an area that is adhered to an inner surface of the edible container 20, and an area that is not adhered thereto. Because the first packaging material 31 is not adhered only to any one element, a situation, in which the first packaging material 31 is adhered to the frozen food 10 whereby the frozen food 10 is crushed or pulled up, may be prevented or a situation, in which the first packaging material 31 is adhered to the edible container 20 whereby the edible container 20 is damaged, may be prevented when the first packaging material 31 is removed through the method of FIG. 5.

The edible container 20 is formed of an edible material, includes the interior space 25, and has a conical shape. In this structure, the interior space 25 of the edible container 20 also may have a conical shape.

FIG. 9 is a planar view of the edible container 20 according to an embodiment of the present application.

The edible container 20 may include an inner skin 22 and an outer skin 21. Both of the inner skin 22 and the outer skin 21 may be formed of the edible material. The outer skin 21 may surround the inner skin 22. The outer surface of the edible container 20 having a conical shape may constitute the outer skin 21, and the inner surface thereof may constitute the inner skin 22. Meanwhile, the outer skin 21 may be larger than the inner skin 22, and the inner surface may be constituted by the outer skin 21 and the inner skin 22.

The inner skin 22 may be formed in a form of a grain sheet including at least one selected from a group consisting of rice, barley, beans, millet, sorghum, flour, and corns. The grain sheet is a thin sheet of an arbitrary shape, and may be continuously formed in the outer skin 21 or may be discontinuously formed to be partially connected to the outer skin 21. The inner skin may be manufactured by using power of the above-described grains, starch, and water. The grain sheet may be rice paper of a sheet shape or rice paper (for example, skin for Cha gio such as net skin) of a net shape, or rice crush, rice starch ejection liquid formed discontinuously may be variously used as the grain sheet.

Furthermore, when the inner skin 22 is manufactured, the unique taste of a source material, such as shrimps, sesames, black sesames, laver powder, anchovies, squids, or a combination thereof, may be added and the chewing taste may be improved by adding the source material.

The rice may be polished rice, unpolished rice, red rice, green rice, and/or sticky rice. The starch may be selected from a group consisting of potato starch, sweet potato starch, tapioca starch, corn starch, rice starch, and a combination thereof, and preferably, may tapioca starch may be selected.

The grain sheet may be used after purchasing a grain sheet product that are on sale in the markets or may be directly manufactured by using a conventional known method.

The outer skin 21 may be formed in a form of a dry seaweed sheet to include at least one selected from a group consisting of chlorella, green laver, sea staghorns, laver, agar-agar, seaweed, kelp, gulfweed, and fusiformis. The above-described materials may be used alone or in a mixture. The dry seaweed sheet may be obtained by drying the seaweed itself or a single piece, or flake or powder of the seaweed into a thin sheet form of an arbitrary shape.

Laver maybe dried together with green laver, chrorella, and sea mustard to be used as the outer skin 21. To further improve the flavor of the seaweeds, various seasonings may be further added to the seaweeds.

The inner skin 22 may have a property for reinforcing the outer skin 21 that is relatively fragile. For example, the inner skin 22 may be formed of a material having a strength that is stronger than that of the outer skin 21. For example, the inner skin 22 may be formed of a material having an elasticity that is stronger than that of the outer skin 21. For example, the inner skin 22 may have a strength that is strong enough to maintain the conical shape without using a separate support member because it is easily formed in the conical shape as the strength thereof becomes lower in a state of a high content of moisture and the strength thereof is improved after being baked in a specific condition.

The outer skin 21 and the inner skin 22 may be bonded to each other to manufacture a body sheet. The body sheet may be manufactured by joining one outer skin 21 and one inner skin 22, but also may be manufactured by joining one or more outer skins 21 and one or more inner skins 22. Then, at least one side surface of the outer skin 21 may be slightly larger than the inner skin 22. The body sheet obtained by bonding the outer skin 21 and the inner skin 22 in this way may be the unrolled edible container 20.

The joining of the outer skin 21 and the inner skin 22, which is performed in the process of manufacturing the body sheet, may be performed according to any method that is sitologically allowed. As an example, the body sheet may be manufactured by applying an adhesive layer to at least one of at least one outer skin 21 and at least one inner skin 22 and seaming and pressing the outer skin 21 and the inner skin 22. Then, an adhesive that forms the adhesive layer may include water to improve a crispy feeling of the edible container 20 manufactured finally.

A profile of the inner skin 22 may have a circular shape in an unrolled state. A diameter of the inner skin 22 may be 15 cm to 18 cm, a weight thereof may be 4 g to 6 g, and a thickness thereof may be 0.2 mm to 0.5 mm.

The profile of the outer skin 21 may include a first circumference 211, a second circumference 212, a third circumference 213, and a fourth circumference 214 in an unrolled state, and the circumferences are connected to each other to form the entire circumference of the outer skin 21.

The first circumference 211 is, among the circumferences of the inner skin 22, a circumference formed to correspond to a portion of the inner skin 22 located on an upper side, and may have a curved shape as the inner skin 22 is circular. The second circumference 212 is a circumference that extends from opposite ends of the first circumference 211, and thus two second circumferences 212 may be provided. The two second circumferences 212 may be formed to extend in a direction that is inclined downwards as it goes to an outside with respect to a horizontal direction. That is, the second circumference 212 may be formed in a direction that is inclined downwards with respect to a left side that is an outer side, at a left end of the first circumference 211, and the second circumference 212 may be formed in a direction that is inclined downwards with respect to a right side that is an outer side, at a right end of the first circumference 211.

The third circumference 213 may be formed to extend in a direction that is inclined from lower ends of the two second circumferences 212 downwards as it goes inwards with respect to a horizontal direction. Accordingly, two third circumferences 213 may be provided. Among the two third circumferences 213, the third circumference 213 located on the left side may extend in a direction that is inclined from a lower end of, among the two second circumferences 212, the second circumference 212 located on the left side downwards with respect to a right side that is an inner side. Among the two third circumferences 213, the third circumference 213 located on the right side may extend in a direction that is inclined from a lower end of, among the two second circumferences 212, the second circumference 212 located on the right side downwards with respect to a left side that is an inner side.

The fourth circumference 214 is located on a lowermost side, and connects the lower ends of the two third circumferences 213. Furthermore, the fourth circumference 214 may be formed to correspond to another part of the circumference of the inner skin 22, which is located on a lower side. Accordingly, the fourth circumference 214 may have a curved shape.

At a portion, at which the first circumference 211 and the fourth circumference 214 are closest to the circumference of the inner skin 22, a minimum distance between the portion and the circumference of the inner skin 22 may be a specific distance. A situation, in which the inner skin 22 is exposed to an outside of the outer skin 21, may be prevented by spacing the inner skin 22 and the outer skin 21 apart from each other by at least a specific distance.

The second circumferences 212 may include (2-1)-th circumferences 2121 and (2-2)-th circumferences 2122. The two (2-1)-th circumferences 2121 extend from opposite ends of the first circumference 211. The two (2-2)-th circumferences 2122 may extend from ends of the (2-1)-th circumferences 2121, and may connect the (2-1)-th circumferences 2121 and the third circumferences 213.

The (2-1)-th circumferences 2121 and the (2-2)-th circumferences 2122 are parts of the second circumferences 212, and thus extend outwards and face a direction that is inclined downwards as well. Then, the second circumferences 2122 may form an angle that is larger than an angle formed by the (2-1)-th circumferences 2121 with respect to a horizontal direction, with respect to the horizontal direction. Accordingly, at points, at which the (2-1)-th circumferences 2121 and the (2-2)-th circumferences 2122 meet each other, the inclination may be changed.

The (2-1)-th circumferences 2121 may extend along a tangential direction obtained by drawing a line from an end of the connected first circumference 211 to the first circumference 211. Accordingly, the first circumference 211 and the (2-1)-th circumferences 2121 may be connected to each other softly.

The third circumferences 213 may extend along a tangential direction obtained by drawing a line from an end of the connected fourth circumference 214 to the fourth circumference 214. Accordingly, the fourth circumference 214 and the (2-1)-th circumferences 2121 may be connected to each other softly.

A corner, at which the second circumference 212 and the third circumference 213 meet each other, may be rounded. The second circumference 212 and the third circumference 213 may extend inwards and outwards, respectively, as they go downwards and a sharp corner may be formed at a point, at which they meet each other, but the corner may be rounded to be easily formed.

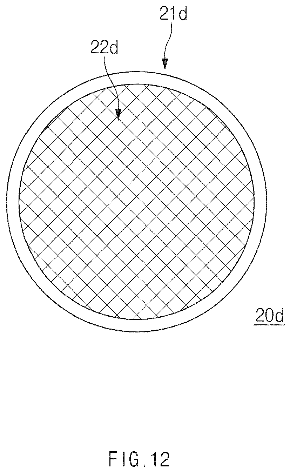

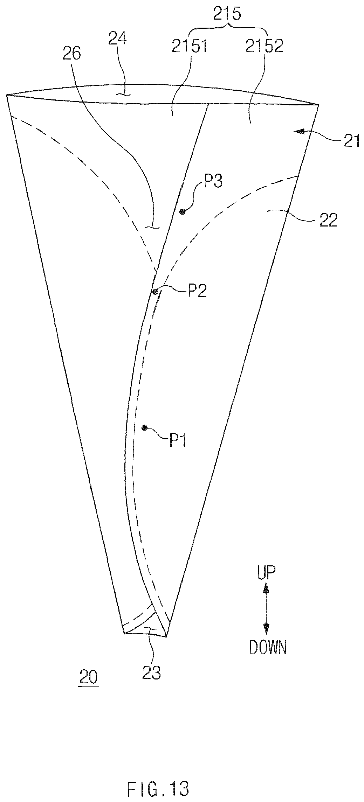

A screening part 215 may be defined by the second circumferences 212, the third circumferences 213, and the circumference of the inner skin 22. The screening part 215 refers to a portion of the outer skin 21, which protrudes from the circumference of the inner skin 22 further than another portion thereof, in a state, in which the edible container 20 is unrolled. Assume that the screening part located on the left side of FIG. 12 is a left screening part 2151 and the screening part located on the right side is a right screening part 2152. A roll of the screening part 215 will be described with reference to the drawings that follow FIG. 13.

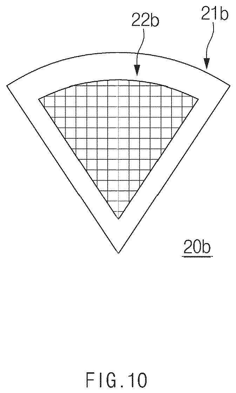

FIG. 10 is a planar view of an exemplary edible container 20b. As shown in FIG. 10, the edible container 20b having a fan shape when being unrolled may be considered. To provide the shape, an outer skin 21b and an inner skin 22b also may have fan shapes that have the same center angle but have different sizes.

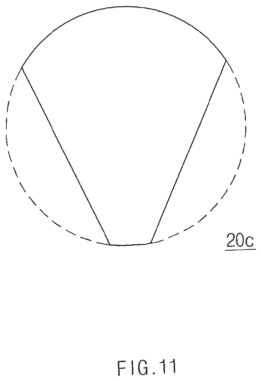

FIG. 11 is a planar view of another exemplary edible container 20c. As shown in FIG. 11, the edible container 20c having an unrolled shape that is similar to a fan shape, which is obtained by drawing two cords in a circle and cutting away two arc shapes, may be formed. When the unrolled shape of the edible container 20c has the shapes of FIGS. 10 and 11, an overlapping portion is minimized and an excellent texture of foods is secured.

FIG. 12 is a planar view of another exemplary edible container 20d. As in FIG. 12, the edible container 20d having a circular shape may be considered. To provide the shape, an outer skin 21d and an inner skin 22d also may have circular shapes that have different sizes. Waste of materials, which may be caused during production, may be reduced by forming the circular edible container 20d.

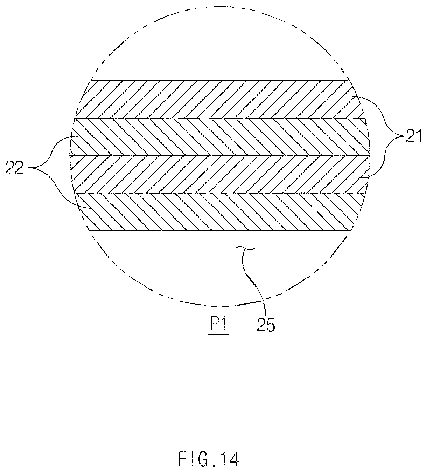

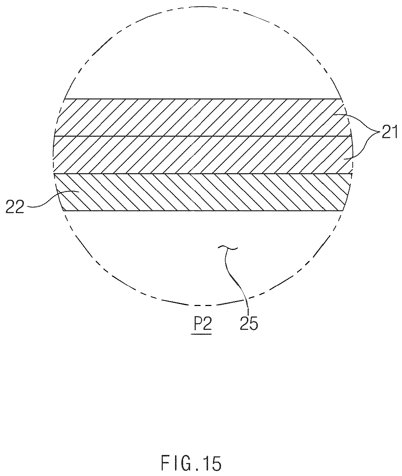

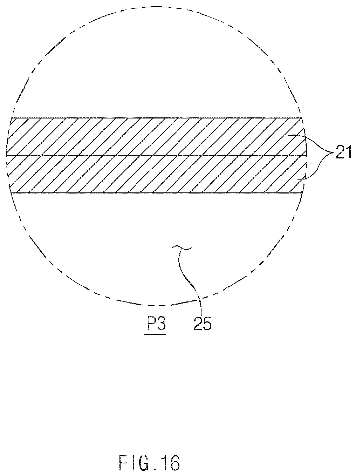

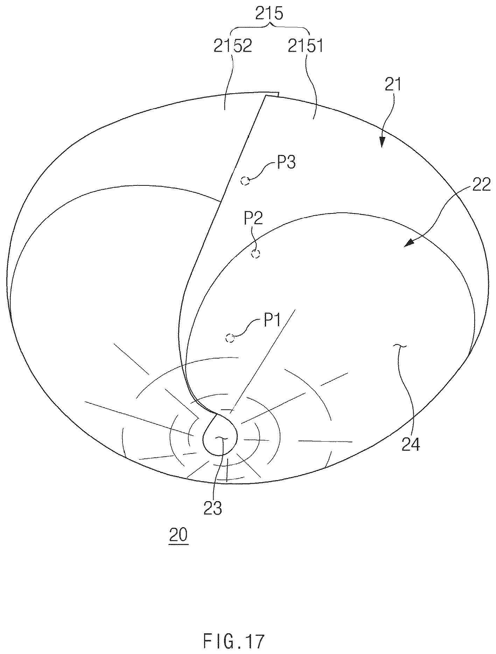

FIG. 13 is a view of the edible container 20 according to an embodiment of the present application, when viewed from a front side. FIG. 14 is a view illustrating a first stack structure P1 according to an embodiment of the present application. FIG. 15 is a view illustrating a second stack structure P2 according to an embodiment of the present application. FIG. 16 is a view illustrating a third stack structure P2 according to an embodiment of the present application. FIG. 17 is a view of the edible container 20 according to an embodiment of the present application, when viewed from a top.

Referring to FIGS. 13 to 17, the edible container 20 may be formed by rolling the unrolled outer skin 21 into a conical shape and attaching a portion of the edible container 20 to another portion thereof in a state, in a state of the body sheet, in which the unrolled inner skin 22 is attached to the unrolled outer skin 21. That is, the structure may be formed by rolling the unrolled edible container 20 into a conical shape and fixing an overlapping portion. Although a direction, in which the edible container 20 is rolled, is illustrated in a manner, in which a portion of an inner surface of the right screening part 2152 overlaps a portion of the outer surface of the left screening part 2151, an opposite manner is also possible.

In this structure, stack structures of the areas may be different when they go inwards from different points of the outer skin 21. As illustrated, the edible container 20 may have the first stack structure P1, the second stack structure P2, and the third stack structure P3.

The edible container 20 may have a stack structure, in which a portion of the outer skin 21, a portion of the inner skin 22, another portion of the outer skin 21, and another portion of the inner skin 22 are stacked in a sequence thereof from an outer side to an inner side, in an area of the outer skin 21, which has the first stack structure P1. The area may be formed thickest in a structure as the inner skin 22 and the outer skin 21 overlap each other once. An extent of the area having the first stack structure P1 may be 24% to 33% of the extent of the inner skin 22. Alternatively, an extent of the area having the first stack structure P1 may be 32% to 49% of an extent of a portion without the stacked part.

The edible container 20 may have a stack structure, in which a portion of the outer skin 21, a portion of the inner skin 22, and another portion of the outer skin 21 are stacked in a sequence thereof from an outer side to an inner side, in an area of the outer skin 21, which has the second stack structure P2.

The edible container 20 may have a stack structure, in which a portion of the outer skin 21 and another portion of the outer skin 21 are stacked in a sequence thereof from an outer side to an inner side, in an area of the outer skin 21, which has the third stack structure P3.

In the other areas, the edible container 20 may have a stack structure of a single layer or a dual layer, in which the outer skin 21 and the inner skin 22 overlap each other.

The outer skin 21 includes the inner skin 22 on an inner side, in the unrolled state. The outer skin 21 may fill a valley 26 formed by the inner skin 22 to complementarily form a conical shape. In detail, when the inner skin 22 is rolled to have a schematically conical shape, the valley 26 may be formed on an upper side thereof by the circumference of the inner skin. When the valley 26 is formed, the frozen food 10 that is the contents may be exposed to an outside and may be separated from the interior space 25 through the valley 26 and the upper opening 24.

However, the screening part 215 protrudes from the outer skin 21 according to the present application to bury the part, and thus the schematically conical shape may be complemented to be closer to a general conical shape. That is, the screening part 215 may be disposed at a portion, at which the valley 26 is formed. The edible container 20 may be formed such that the upper opening 24 formed on an upper side is disposed horizontally. However, the present application is not limited thereto, and the upper opening 24 formed at an upper side of the edible container 20 may be disposed to be oblique with respect to a horizontal direction and may have an elliptical shape. For example, a diameter of the upper opening 24 of the edible container 20 may be 60 mm to 65 mm, but the present application is not limited thereto.

A lower opening 23 may be formed at a lower side of the edible container 20. As the lower opening 23 is formed, moisture or oil generated during a cooking process may be discharged due to a self-weight thereof, and an area that is adjacent to the lower opening 23 may be prevented from being damaged during a freezing process.

### Packaging Material 30

According to the embodiment of the present application, the packaging material 30 may be provided, and the packaging material may include the first packaging material 31 or the second packaging material 32.

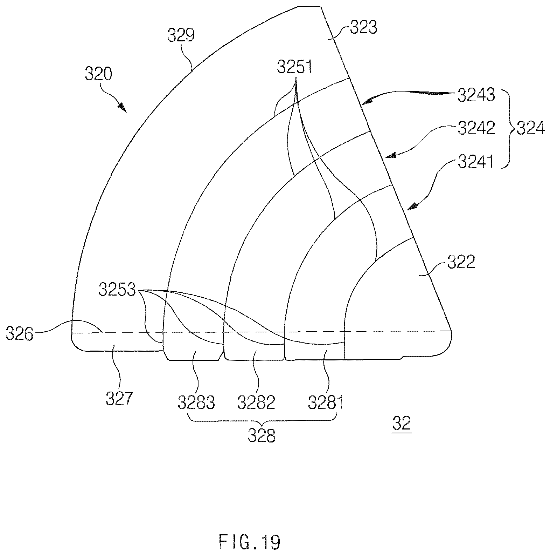

FIG. 18 is a planar view of an inner surface of the second packaging material 32 according to an embodiment of the present application. FIG. 19 is a planar view of an outer surface of the second packaging material 32 according to an embodiment of the present application.

A cover piece 323, a body piece 324, a lower cone piece 322, and a cutting piece 328, which will be described blow, are illustrated in FIG. 1, and thus a structure of the second packaging material 32 may be recognized with reference to them.

According to the embodiment of the present application, the product may be provided in a form of the second packaging material 32 and the first packaging material 31. The description of the first packaging material 31 and the second packaging material 32 that constitute the above-described packaging material 30, the description of the edible container 20, and the description of the frozen food 10 also may be applied to the case, in which the product is provided in a form of a container, in the same manner.

The second packaging material 32 may include a second packaging material body part 320 and the second heat emitting layer 321. The second packaging material body part 320 is a part that has a fan shape to form the conical shape. To form the conical shape, the second packaging material body part 320 may be rolled, but the method for forming the conical shape is not limited thereto. The second packaging material body part 320 may be formed of paper, and a surface thereof may be further coated with PET and the like.

The second heat emitting layer 321 is a part that is configured to emit heat by using microwaves. For emission of heat, the second heat emitting layer 321 may be formed by depositing a heat emitting material that is stimulated by the microwaves to emit heat on the second packaging material body part 320. The second heat emitting layer 321, for example, may be a susceptor that is formed by depositing a thin metal on paper, and a surface thereof may be further coated with PET and the like.

The second heat emitting layer 321 covers at least a portion of the second packaging material body part 320. In detail, the second packaging material body part 320 may a central point and a body part arc 329 that define a fan shape having a specific center angle A3. The second heat emitting layer 321 may cover an area of the second packaging material body part 320 defined by an outer arc located on an inner side of the body part arc 329 with respect to the center point and formed while the center point is taken as a center thereof, and an inner arc located on an inner side of the outer arc and formed while the center point is taken as a center thereof. The second heat emitting layer 321 may have a shape of a portion of a ring, in which the center point of the second packaging material body part 320 is taken as a center thereof.

A cutting line 3251 may be formed in the second packaging material body part 320. The cutting line 3251 may be formed to guide division of the second packaging material body part 320. The user may easily eat the contents located on an inner side of the second packaging material 32 by cutting and removing the second packaging material body part 320 into smaller pieces in a state, in which the second packaging material body part 320 is rolled into a conical shape as in FIG. 1.

The cutting line 3251 may be formed in an arc shape that forms a concentric circle with the fan shape of the second packaging material body part 320. A plurality of cutting lines 3251 may be formed. Accordingly, the second packaging material body part 320 may be separated into pieces, the number of which is larger than the number of the cutting lines 3251 by one.

The cutting line 3251 may be formed by pressing one surface of the second packaging material body part 320. The one surface of the second packaging material body part 320, on which the cutting line 3251 is formed, is a surface that becomes an outer surface when the second packaging material body part 320 is rolled to form a conical shape.

Among the cutting lines 3251, the cutting line 3251 located on an outermost side along the radial direction and the cutting line 3251 located on an innermost side may coincide with an outer end and an inner end of the second heat emitting layer 321, respectively. Accordingly, among the pieces of the second packaging material body part 320 separated by the cutting lines 3251, the cover piece 323 that is a piece located on an outermost side and the lower cone piece 322 located on an innermost side may be parts, in which the second heat emitting layer 321 is not formed.

The cover piece 323 may have a shape of a portion of a ring, in which the center point of the second packaging material body part 320 is taken as a center thereof. Furthermore, the body pieces 324 that are pieces of the second packaging material body part 320, in which the second heat emitting layer 321 is formed, also may have a shape of a portion of a ring, in which the center point of the second packaging material body part 320 is taken as a center thereof, and may have a shape of a portion of another ring having a different radius. The lower cone piece 322 may have a shape of a fan, in which the center point of the second packaging material body part 320 is taken as a center thereof, and may form a conical shape when being rolled.

Three body pieces 324 are provided in three pieces in the embodiment of the present application, and thus it is illustrated that a total of four cutting lines 3251 are disposed to form five pieces, but the number thereof is not limited thereto. In the embodiment of the present application, the lower cone piece 322, a first body piece 3241, a second body piece 3242, a third body piece 3243, and the cover piece 323 may be disposed in a sequence thereof from the center point of the second packaging material body part 320 radially outwards.

The cover piece 323 may be a part that is pressed inwards to seals the contents when the packaged frozen food product is formed.

An auxiliary cutting line 3252 may be further formed in the second packaging material body part 320. The auxiliary cutting line 3252 may be formed to guide the division of the second heat emitting layer 321 when the second packaging material body part 320 is divided by the cutting line 3251. The auxiliary cutting line 3252 may be formed in the second heat emitting layer 321. The auxiliary cutting line 3252 may be formed by pressing the second heat emitting layer 321. The second heat emitting layer 321 may be divided into a first-second heat emitting layer 3211, a second-second heat emitting layer 3212, and a third-second heat emitting layer 3213 by the auxiliary cutting lines 3252, and the divided second heat emitting layers 3211, 3212, and 3213 may correspond to the divided body pieces 3241, 3242, and 3243.

One surface of the second packaging material body part 320, on which the second heat emitting layer 321 having the auxiliary cutting lines 3252 is located, may be a surface that is opposite to one surface of the second packaging material body part 320 having the cutting lines 3251. The one surface of the second packaging material body part 320, on which the second heat emitting layer 321 is located, is a surface that becomes an inner surface when the second packaging material body part 320 forms a conical shape.

When the second packaging material body part 320 is viewed while the surface, on which the cutting lines 3251 and the auxiliary cutting lines 3252 are formed, is neglected, one end of the auxiliary cutting lines 3252 may meet the cutting lines 3251 along a circumferential direction. Accordingly, when the pieces starts to be divided along the cutting lines 3251, the cutting lines 3251 meet the auxiliary cutting lines 3252 while the second packaging material body part 320 is torn along the cutting lines 3251, and the second heat emitting layer 321 starts to be torn.

Two kinds of auxiliary cutting lines 3252 may be disposed. The auxiliary cutting lines 3252 may include an outer auxiliary cutting line 3252 disposed on an outer side of the cutting lines 3251 with respect to a radial direction, and an inner auxiliary cutting line 3252 disposed on an inner side of the cutting lines 3251. Because a force may be applied radially in an unbalanced way even though the force is applied along the cutting lines 3251 during the division, the outer auxiliary cutting line 3252 or the inner auxiliary cutting line 3252 guide the division toward a side, to which the force is biased, whereby the second packaging material body part 320 and the second heat emitting layer 321 is easily cut and divided.

Two radial lines that connect opposite ends of the body part arc 329 that defines the fan shape of the second packaging material body part 320 and the center point of fan shape may be considered when the second packaging material body part 320 is rolled into a conical shape. An outer packaging part may further include a bonding part 327 that protrudes outwards from any one of the two radial lines along a circumferential direction such that an area that is adjacent to the other of the two radial lines is bonded and fixed.

The bonding part 327 may be formed throughout the any one of the two radial lines. An adhesive may be applied to an inner surface of the bonding part 327, and an area of the outer surface of the second packaging material body part 320, which is adjacent to a radial line and in which the bonding part 327 is not formed, meets the inner surface of the bonding part 327 to form and fix the conical shape at the same time.

In an area, in which the bonding part 327 and the second packaging material body part 320 are connected to each other, a folded line 326 may be pressed and formed along the radial line. The bonding part 327 may be folded along the folded line 326 whereby the bonding part 327 may be easily bonded to an outer surface of the second packaging material body part 320.

The second packaging material 32 may further include the cutting piece 328. The cutting piece 328 is a part that is configured such that a portion of the second packaging material body part 320 is separated along the cutting lines 3251 as the cutting piece 328 is gripped and pressed when the second packaging material body part 320 is rolled into the conical shape. The cutting pieces 328 are formed to protrude at locations on the bonding part 327 corresponding to the body piece 324 that are portions of the second packaging material body part 320, which are located between the adjacent two cutting lines 3251. Accordingly, three cutting pieces 328 also may be disposed when three body pieces 324 are disposed as in the embodiment of the present application. A first cutting piece 3281 may correspond to the first body piece 3241, a second cutting piece 3282 may correspond to the second body piece 3242, and a third cutting piece 3283 may correspond to the third body piece 3243. However, the cutting piece 328 corresponding to the lower cone piece 322 may be formed, and the number of the cutting pieces 328 is not limited thereto.

Because the cutting pieces 328 are provided to cut the different body pieces 324, it is necessary to distinguish the cutting pieces 328. Accordingly, extending cutting lines 3253 extending from the cutting lines 3251 and notches may be formed between the adjacent cutting pieces 328 whereby the cutting pieces 328 may be distinguished from each other. Due to the extending cutting lines 3253 and the notches, the body pieces 324 may be cut even though the user grips only the cutting pieces 328.

The cutting pieces 328 are exposed to an outer side to be gripped by the user without being bonded, when the second packaging material 32 is rolled to form a conical shape as in FIG. 1. As the user grips the exposed cutting piece 328 and pulls the cutting piece 328 along the circumference of the second packaging material 32, the body piece 324 corresponding to the gripped cutting piece 328 may be divided.

FIG. 20 is a planar view of the first packaging material 31 according to an embodiment of the present application.

The first packaging material 31 may include the first heat emitting layer 312 and the protrusion 311. The first heat emitting layer 312 is a part that is configured to emit heat by using microwaves to heat the frozen foods 10 while surrounding the frozen foods 10.

The first heat emitting layer 312 may have a shape defined by an outer line, an inner line, and two connection lines 3123 connecting left distal ends of the outer line and the inner line and right distal ends of the outer line and the inner line, respectively. The outer line may be an outer arc 3122, and the inner line may be an inner arc 3121. A length of the inner arc 3121 may be smaller than a length of the outer arc 3122. The outer arc 3122 and the inner arc 3121 may be disposed concentrically.

An angle A4 formed by the two connection lines 3123 may be larger than a center angle A5 of a fan defined by the outer arc 3122 and the center of the outer arc 3122. Accordingly, the first heat emitting layer 312 has a shape that is different from a shape obtained by simply removing a fan shape defined by the inner arc 3121 from a fan shape defined by the outer arc 3122.

The angle A4 formed by the two connection lines 3123 may be formed to be smaller than the center angle A5 of the fan shape defined by the outer arc 3122, whereby an angle relationship and a location relationship between the first packaging material 31 and the edible container 20 as in FIG. 8 may be formed. Accordingly, the user may easily separate the first packaging material 31 from a space between the frozen food (10 of FIG. 2) and the edible container 20.

Meanwhile, in another example, an angle formed by the two connection lines may be the same as a center angle of a fan shape defined by the outer arc and the center of the outer arc. That is, an angle corresponding to A4 of FIG. 20 may coincide with an angle corresponding to A5. Furthermore, a center angle of the fan shape defined by the center of the outer arc may be the same as the center angle (A3 of FIG. 18) of the fan shape formed by the second packaging material body part (320 of FIGS. 18 and 19). Accordingly, in this case, the angles corresponding to A3 and A4 may become identical, and the shape of the rolled first packaging material may have a shape corresponding to a portion of the shape of the inner surface of the edible container (20 of FIG. 1) and the rolled first packaging material may be adhered to the portion of the shape of the inner surface of the edible container (20 of FIG. 1). When the first packaging material is formed to have the angle relationship, the first heat emitting layer may be easily adhered to the edible container (20 of FIG. 1). Accordingly, it may be helpful to prevent moisture from being delivered from the interior to the edible container (20 of FIG. 1), and revive a crispy feeling by heating the edible container (20 of FIG. 1) well.

The first heat emitting layer 312 may include a heat emitting area applied with a heat emitting material stimulated by the microwaves to emit heat, and a transmission area that is not applied with the heat emitting material to transmit the microwaves. The transmission area, as illustrated, may be formed in the heat emitting area in a pattern including a plurality of cross-shaped slits. The patterns of the heat emitting area and the transmission area also may be formed in the second heat emitting layer 321 of the second packaging material 32 in the same manner. The microwaves irradiated to the heat emitting area stimulate the heat emitting material to emit heat, and the heat heats the frozen food product. The microwaves that passed through the transmission area is directly delivered to the edible container 20 and the frozen food 10 to emit heat.

The heat emitting area of the first heat emitting layer 312 may include a paper layer, a metal layer deposited on one surface of the paper layer, and stimulated by the microwaves to emit heat, and a PET layer coated on the metal layer. Furthermore, the first heat emitting layer 312 may further include an additional PET layer coated on an opposite surface to the one surface of the paper layer, on which the metal layer is deposited. The stack structure also may be applied to the stack structure of the second heat emitting layer 321 and the second packaging material body part 320.

The first packaging material 31 may include the protrusion 311 that protrudes from the first heat emitting layer 312 to be gripped. The protrusion 311 may protrude from the outer arc 3122 of the first heat emitting layer 312.

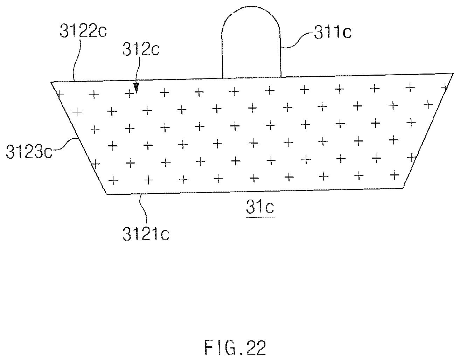

FIGS. 21 and 22 are planar views of first packing materials 31b and 31c according to other modifications of an embodiment of the present application.

Referring to FIG. 21, the first packaging material 31b may have the above-described protrusion 311b and a first heat emitting layer 312b of a rectangular shape. Accordingly, an inner line 3121b and an outer line 3122b that define the first heat emitting layer 312b may be parallel to each other and have the same length, and may be connected to each other through connection lines 3123b that are perpendicular to each other.

Referring to FIG. 22, the first packaging material 31c may have the above-described protrusion 311c and a first heat emitting layer 312c of a ladder shape. Accordingly, an inner line 3121c and an outer line 3122c that define the first heat emitting layer 312c may be parallel to each other such that the inner line 3121c is shorter than the outer line 3122c, and may be connected to each other through inclined connection lines 3123c that are inclined with respect to each other. Furthermore, a tapered shape, in which a width of the first heat emitting layer 312c becomes smaller as it goes farther from the protrusion 311c.

The first packaging materials 31b and 31c according to the other modifications of the embodiment of the present application may be applied to the frozen food product, the packaged frozen food product, and the container, which have been described above.

## Claims

1. A frozen food product comprising:
at least two frozen foods (10); and
a container accommodating the frozen food (10),
wherein the container includes a contact area contacting the frozen foods (10) , and a noncontact area spaced apart from the frozen foods, **characterized in that**:
the container includes a conical edible container (20) accommodating the frozen foods (10) and formed of the edible material,
the frozen food product further comprises an inner moisture delivery preventing layer disposed in at least a partial area between the frozen food and an outer surface of the edible container (20), and configured to suppress moisture from being delivered from the frozen food (10) to the edible container (20).

2. The frozen food product of claim 1, wherein at least one of the frozen foods includes a curved part having a curved shape.

3. The frozen food product of claim 2, wherein the at least two frozen foods (10) include:
a first frozen food including a first curved part that is the curved part, and inserted into the container from the first curved part to be accommodated in the container; and
a second frozen food including a second curved part that is the curved part, which is seated on a flat upper surface formed at an upper side of the first frozen food.

4. The frozen food product of claim 3, wherein a volume of the second frozen food is larger than a volume of the first frozen food.

5. The frozen food product of claim 1, wherein the inner moisture delivery preventing layer includes an inner oil layer coated on an inner surface of the edible container (20).

6. The frozen food product of claim 1, wherein the inner moisture delivery preventing layer includes a first packaging material having a shape that surrounds the frozen food (10) when being inserted between the frozen food (10) and the edible container (20).

7. The frozen food product of claim 6, wherein the frozen food (10) includes a first frozen food accommodated in an interior space of the container and a second frozen food seated on an upper side of the first frozen food, and
wherein a lower portion of the first packaging material is disposed between the second frozen food and the first frozen food with respect to the upward/downward direction.

8. The frozen food product of claim 6, wherein the first packaging material includes a first heat emitting layer configured to emit heat by using microwaves.

9. The frozen food product of claim 8, wherein the first packaging material further includes a protrusion protruding from the first heat emitting layer upwards such that the first heat emitting layer is separated from a location between the frozen food and the edible container through gripping.

## Patentansprüche

1. Gefrorenes Lebensmittelprodukt, umfassend:
mindestens zwei gefrorene Lebensmittel (10); und
einen Behälter, der das gefrorene Lebensmittel (10) aufnimmt,
wobei der Behälter einen Kontaktbereich beinhaltet, die die gefrorenen Lebensmittel (10) berührt, und einen Nicht-Kontaktbereich, der von den gefrorenen Lebensmitteln beabstandet ist, **dadurch gekennzeichnet, dass**:
der Behälter einen konischen, essbaren Behälter (20) beinhaltet, der die gefrorenen Lebensmittel (10) aufnimmt und aus dem essbaren Material gebildet ist,
das gefrorene Lebensmittelprodukt weiter eine innere Feuchtigkeitszufuhr-Schutzschicht umfasst, die in mindestens einem Teilbereich zwischen dem gefrorenen Lebensmittel und einer äußeren Fläche des essbaren Behälters (20) angeordnet und konfiguriert ist, um zu unterbinden, dass Feuchtigkeit vom gefrorenen Lebensmittel (10) in den essbaren Behälter (20) abgegeben wird.

2. Gefrorenes Lebensmittelprodukt nach Anspruch 1, wobei mindestens eines der gefrorenen Lebensmittel einen gekrümmten Teil beinhaltet, der eine gekrümmte Form aufweist.

3. Gefrorenes Lebensmittelprodukt nach Anspruch 2, wobei die mindestens zwei gefrorenen Lebensmittel (10) Folgendes beinhalten:
ein erstes gefrorenes Lebensmittel, darin eingeschlossen einen ersten gekrümmten Teil, wobei es sich um den gekrümmten Teil handelt, und eingeführt in den Behälter vom ersten gekrümmten Teil, um im Behälter aufgenommen zu sein; und
ein zweites gefrorenes Lebensmittel, darin eingeschlossen einen zweiten gekrümmten Teil, wobei es sich um den gekrümmten Teil handelt, der auf einer flachen oberen Fläche aufliegt, die auf einer oberen Seite des ersten gefrorenen Lebensmittels gebildet ist.

4. Gefrorenes Lebensmittelprodukt nach Anspruch 3, wobei ein Volumen des zweiten gefrorenen Lebensmittels größer ist als ein Volumen des ersten gefrorenen Lebensmittels.

5. Gefrorenes Lebensmittelprodukt nach Anspruch 1, wobei die innere Feuchtigkeitszufuhr-Schutzschicht eine innere Ölschicht beinhaltet, die auf einer inneren Fläche des essbaren Behälters (20) beschichtet ist.

6. Gefrorenes Lebensmittelprodukt nach Anspruch 1, wobei die innere Feuchtigkeitszufuhr-Schutzschicht ein erstes Verpackungsmaterial beinhaltet, das eine Form aufweist, die das gefrorene Lebensmittel (10) umschließt, wenn es zwischen das gefrorene Lebensmittel (10) und den essbaren Behälter (20) eingeführt wird.

7. Gefrorenes Lebensmittelprodukt nach Anspruch 6, wobei das gefrorene Lebensmittel (10) ein erstes gefrorenes Lebensmittel beinhaltet, das in einem inneren Raum des Behälters aufgenommen ist, und ein zweites gefrorenes Lebensmittel, das auf einer oberen Seite des ersten gefrorenen Lebensmittels aufliegt, und
wobei ein unterer Abschnitt des ersten Verpackungsmaterials zwischen dem zweiten gefrorenen Lebensmittel und dem ersten gefrorenen Lebensmittel mit Bezug auf die Richtung nach oben/unten angeordnet ist.

8. Gefrorenes Lebensmittelprodukt nach Anspruch 6, wobei das erste Verpackungsmaterial eine erste wärmeabgebende Schicht beinhaltet, die konfiguriert ist, um Wärme unter Verwendung von Mikrowellen abzugeben.

9. Gefrorenes Lebensmittelprodukt nach Anspruch 8, wobei das erste Verpackungsmaterial weiter einen Vorsprung beinhaltet, der von der ersten wärmeabgebenden Schicht nach oben vorspringt, sodass die erste wärmeabgebende Schicht von einer Position zwischen dem gefrorenen Lebensmittel und dem essbaren Behälter durch Klemmen getrennt ist.

## Revendications

1. Produit alimentaire congelé comprenant :
au moins deux aliments congelés (10) ; et
un contenant accueillant l'aliment congelé (10),
dans lequel le contenant inclut une zone de contact en contact avec les aliments congelés (10), et une zone de non contact espacée des aliments congelés, **caractérisé en ce que** :
le contenant inclut un contenant comestible conique (20) accueillant les aliments congelés (10) et formé de la matière comestible,
le produit alimentaire congelé comprend en outre une couche empêchant un transfert d'humidité interne disposée dans au moins une zone partielle entre l'aliment congelé et une surface externe du contenant comestible (20), et configurée pour supprimer le transfert d'humidité de l'aliment congelé (10) vers le contenant comestible (20).

2. Produit alimentaire congelé selon la revendication 1, dans lequel au moins l'un des aliments congelés inclut une partie incurvée ayant une forme incurvée.

3. Produit alimentaire congelé selon la revendication 2, dans lequel les au moins deux aliments congelés (10) incluent :
un premier aliment congelé incluant une première partie incurvée qui est la partie incurvée, et inséré dans le contenant à partir de la première partie incurvée pour être accueilli dans le contenant ; et
un deuxième aliment congelé incluant une deuxième partie incurvée, qui est la partie incurvée, qui est positionné sur une surface supérieure plane formée au niveau d'un côté supérieur du premier aliment congelé.

4. Produit alimentaire congelé selon la revendication 3, dans lequel un volume du deuxième aliment congelé est plus important qu'un volume du premier aliment congelé.

5. Produit alimentaire congelé selon la revendication 1, dans lequel la couche empêchant un transfert d'humidité interne inclut une couche d'huile interne enduite sur une surface interne du contenant comestible (20).

6. Produit alimentaire congelé selon la revendication 1, dans lequel la couche empêchant un transfert d'humidité interne inclut une première matière d'emballage ayant une forme qui entoure le produit alimentaire (10) lorsqu'il est inséré entre l'aliment congelé (10) et le contenant comestible (20).

7. Produit alimentaire congelé selon la revendication 6, dans lequel l'aliment congelé (10) inclut un premier aliment congelé accueilli dans un espace intérieur du contenant et un deuxième aliment congelé positionné sur un côté supérieur du premier aliment congelé, et
dans lequel une portion inférieure de la première matière d'emballage est disposée entre le deuxième aliment congelé et le premier aliment congelé par rapport à la direction vers le haut/vers le bas.

8. Produit alimentaire congelé selon la revendication 6, dans lequel la première matière d'emballage inclut une première couche émettrice de chaleur configurée pour émettre de la chaleur à l'aide de micro-ondes.

9. Produit alimentaire congelé selon la revendication 8, dans lequel la première matière d'emballage inclut une saillie faisant saillie à partir de la première couche émettrice de chaleur vers le haut de telle sorte que la première couche émettrice de chaleur est séparée d'un emplacement entre l'aliment congelé et le contenant comestible par préhension.
